**Europäisches Patentamt**

**European Patent Office**

**Office européen des brevets**

(19)

(11) Veröffentlichungsnummer : **0 370 222 B1**

(12)

# EUROPÄISCHE PATENTSCHRIFT

(45) Veröffentlichungstag der Patentschrift :
**03.06.92 Patentblatt 92/23**

(51) Int. Cl.⁵ : **B60H 3/06,** B01D 53/04

(21) Anmeldenummer : **89119024.1**

(22) Anmeldetag : **13.10.89**

(54) **Filter für eine Klimaanlage eines Kraftfahrzeuges.**

(30) Priorität : **22.11.88 DE 3839352**

(43) Veröffentlichungstag der Anmeldung :
**30.05.90 Patentblatt 90/22**

(45) Bekanntmachung des Hinweises auf die
Patenterteilung :
**03.06.92 Patentblatt 92/23**

(84) Benannte Vertragsstaaten :
**DE ES FR GB IT SE**

(56) Entgegenhaltungen :
**EP-A- 0 211 177
DE-A- 2 166 433
US-A- 3 941 034**

(73) Patentinhaber : **Behr GmbH & Co.
Mauserstrasse 3
W-7000 Stuttgart 30 (DE)**

(72) Erfinder : **Seidensticker, Kay, Dipl.-Ing.(FH)
Franklinstrasse 87
W-7000 Stuttgart 40 (DE)**
Erfinder : **Schweizer, Gebhard, Dipl.-Ing.
Arndtstrasse 4
W-7250 Leonberg (DE)**
Erfinder : **Weible, Reinhold, Dipl.-Ing.(FH)
Helmulfstrasse 8
W-7000 Stuttgart 40 (DE)**

(74) Vertreter : **Wilhelm & Dauster Patentanwälte
European Patent Attorneys
Hospitalstrasse 8
W-7000 Stuttgart 1 (DE)**

## Beschreibung

Die Erfindung betrifft ein Filter für eine Klimaanlage eines Kraftfahrzeuges mit einem Filterkörper aus einem in mehreren Lagen angeordnetem Material mit offenen Poren, die mit Adsorptionsmittel, insbesondere Aktivkohle-Körner beschichtet sind, und mit einem den Filterkörper umgebenden Rahmen aus Kunststoff.

Bei einem bekannten Filter der eingangs genannten Art (DE-U 87 17 296.8, Figur 5), ist der Rahmen als ein getrenntes Bauteil hergestellt, in welchen der aus drei Lagen gebildete Filterkörper eingelegt ist. Ein derartiges Filter ist für eine Verwendung in einem Kraftfahrzeug, insbesondere für eine Verwendung als Geruchsfilter, nicht geeignet, da in nicht ausreichender Weise eine Dichtheit zwischen dem Rand des Filterkörpers und dem Rahmen gewährleistet ist. Es besteht die Gefahr, daß sich infolge der bei einem Betrieb eines Kraftfahrzeuges entstehenden Belastungen Setzungen ergeben, so daß Undichtheiten zwischen dem Rand des Filterkörpers und dem Rahmen auftreten. Derartige Undichtheiten führen sofort zu einem Unbrauchbarwerden, da dann die Funktion als Geruchsfilter nicht mehr gewährleistet ist.

Bei einer anderen Bauart eines mehrlagigen Filters (EP-A 0 162 022), ist vorgesehen, daß die unterschiedlichen Filterelemente in einem Gehäuse aus Pappe oder Kunststoff angeordnet sind, das dann seinerseits unter Zwischenfügen eines elastischen Dichtungsmaterials in einem Luftkanal o.dgl. angeordnet wird. Auch bei dieser Bauart ist nicht sichergestellt, daß der Rand der eigentlichen Filterkörper gegenüber dem sie einfassenden Gehäu se abgedichtet ist. Auch hier besteht die Gefahr von Undichtheiten, die die Wirksamkeit des Filters beeinträchtigen können.

Der Erfindung liegt die Aufgabe zugrunde, ein Filter der eingangs genannten Art so auszubilden, daß eine sichere und vor allem dauerhafte Abdichtung zwischen dem Filterkörper und dem ihn einfassenden Rahmen gewährleistet ist.

Diese Aufgabe wird dadurch gelöst, daß der Rahmen an den Filterkörper angeformt ist, und daß zwischen dem Filterkörper und dem Rahmen eine den Rand des Filterkörpers über seine gesamte Stärke einfassende Verbindung aufgrund eines bis zu einer vorgegebenen Tiefe in den Rand des Filterkörpers eingedrungenen, ausgehärteten Materials besteht.

Bei diesem Filter wird eine sehr innige und dauerhafte Verbindung zwischen dem Filterkörper und dem Rahmen erhalten, die die Dichtheit gewährleistet. Dabei kann sich der Werkstoff des Rahmens bzw. des aushärtenden Materials mit dem Grundwerkstoff des Filterkörpers chemisch verbinden, insbesondere wenn es sich um gleiche oder gleichartige Werkstoffe handelt. In der Regel wird eine kraftschlüssige Verbindung jedoch ausreichen, da ohnehin das Adsorptionsmittel eine chemische Verbindung behindert. Um durch diese Art der Verbindung zwischen dem Rahmen und dem Filterkörper keinen nutzbaren Filterquerschnitt zu verlieren, sollte sichergestellt werden, daß das aushärtende Material nur bis zu einer bestimmten Tiefe in den Randbereich eindringt. Eine derartige ausreichende Eindringtiefe ist in der Regel dann gewährleistet, wenn die Eindringtiefe etwa dem eins- bis fünffachen des Durchmessers der offenen Poren entspricht.

In weiterer Ausgestaltung der Erfindung ist vorgesehen, daß der Rand des Filterkörpers mit einem vorgefertigten Rahmenteil umgeben ist, und daß der Zwischenraum zwischen diesem Rahmenteil und dem Rand des Filterkörpers mit dem aushärtenden Material ausgegossen ist. Hierbei kommt vor allem ein druckloses Ausgie ßen in Frage, da sich dann in Verbindung mit der auf die Porengröße des Filtermaterials abgestimmten Viskosität und der Aushärtezeit die Eindringtiefe beherrschen läßt. Das Rahmenteil kann dabei die für den Filter benötigte Festigkeit bewirken, so daß das aushärtende Material nur die Funktion eines Verbindungselementes hat.

Bei einer anderen Ausgestaltung der Erfindung wird vorgesehen, daß das aushärtende Material mit einer Wandstärke von wenigstens 1,0 mm den Rand des Filterkörpers überragt und den Rahmen bildet. Bei dieser Ausführungsform kann auf einen zusätzlichen, vorgefertigten Rahmen verzichtet werden.

In weiterer Ausgestaltung der Erfindung wird vorgesehen, daß zwischen dem Rand des Filterkörpers und dem aushärtenden Material eine Zwischenlage angeordnet ist. Diese Zwischenlage, die aus einer Folie oder einer dünnen Beschichtung bestehen kann, kann dazu dienen, den Filterkörper zu versiegeln, so daß das anschließende Anformen des Rahmens vereinfacht wird. Unter Umständen kann dann der Rahmen mit geringem Druck angegossen oder angespritzt werden. In diesem Fall spielt die Viskosität des aushärtenden Materials und/oder der beim Anbringen aufgebrachte Druck eine geringere Rolle. Die Zwischenlage kann dabei so in die Poren des Filterkörpers hereingeformt werden, daß sie zwischen sich und dem Filterkörper sowie zwischen sich und dem aushärtenden Material einen Formschluß herstellt. Bei einer anderen Ausgestaltung wird vorgesehen, daß die Zwischenlage porös ist. Die Zwischenlage erlaubt dann aufgrund ihrer Porosität, daß aushärtendes Material in den Rand des Filters eindringt. Abhängig von der Porosität kann dabei die Eindringtiefe gesteuert werden. Als derartige poröse Zwischenlagen können perforierte Folien oder Matten oder Fliese o.dgl. aus Fasermaterial Verwendung finden.

In weiterer Ausgestaltung der Erfindung wird vorgesehen, daß der Filterkörper mit einem gewickelten, mit dem aushärtenden Material getränkten, bandförmigen Flies oder Gewebe o.dgl. umgeben ist. Das Flies o.dgl. stellt sicher, daß das aushärtende Material nicht von dem Rand des Filterkörpers abläuft, bevor es aushärten kann. Auch hier ist es zweckmäßig, wenn die Viskosität des aushärtenden Materials auf die Porengröße und auf die Aushärtezeit abgestimmt ist.

Bei einer weiteren Ausführungsform der Erfindung wird vorgesehen, daß der Rahmen an den zum wenigstens teilweisen Schließen der Poren zusammengepreßten Rand des Filterkörpers angeformt ist. Durch das Zusammenpressen und das damit verbundene Schließen der Poren des Filterkörpers wird die Eindringtiefe des aushärtenden Materials begrenzt, so daß es hier nicht auf die Viskosität und/oder Aushärtezeit ankommt. Bei dieser Ausführungsform ist es auch möglich, den Rahmen in einer Form mit relativ hohem Druck anzuspritzen.

Weitere Merkmale und Vorteile der Erfindung ergeben sich aus der nachfolgenden Beschreibung der in den Zeichnungen dargestellten Ausführungsformen.

Fig. 1 zeigt einen Teilschnitt durch den Randbereich eines erfindungsgemäßen Filters mit einem angegossenen Rahmenteil,

Fig. 2 einen Teilschnitt durch den Rand eines Filters mit einem gewickelten Rahmen,

Fig. 3 einen Teilschnitt durch den Rand eines Filters mit einem mittels eines T-förmigen Profils verstärkten Rahmen,

Fig. 4 einen Teilschnitt eines Filters mit einem vor dem Anbringen des Rahmens versiegelten Rand des Filterkörpers,

Fig. 5 einen Teilschnitt durch einen Filter mit einer vor dem Anbringen des Rahmens angebrachten Zwischenlage, die als eine Strömungsbremse wirkt und

Fig. 6 einen Teilschnitt durch einen Filter mit einem mittels Ringen zusammengepreßten Randbereich und angespritztem Rahmen.

Die in der Zeichnung dargestellten Filter besitzen jeweils einen Filterkörper (10), der aus mehreren Lagen (23) zusammengesetzt ist. Die einzelnen Lagen besitzen eine Stärke in der Größenordnung von 3 bis 10 mm. Sie sind als Platten aus einem Polyurethanschaum ausgeschnitten. Dieser Polyurethanschaum besitzt offene Poren von der Größe von etwa 10 bis 30 ppi (Poren per Inch). Die Poren sind mit einem Adsorptionsmittel, insbesondere Aktivkohle-Körnchen beschichtet, wie dies beispielsweise durch das DE-U 87 17 296.8 bekannt ist. Bei allen Ausführungsformen ist vorgesehen, daß der Rand des Filterkörpers (10) mittels eines Rahmens (11, 12, 13, 14, 15, 16) eingefaßt ist, der eine dichte Verbindung zu dem Filterkörper (10) gewährleistet, so daß keine Bypaßströmungen entstehen.

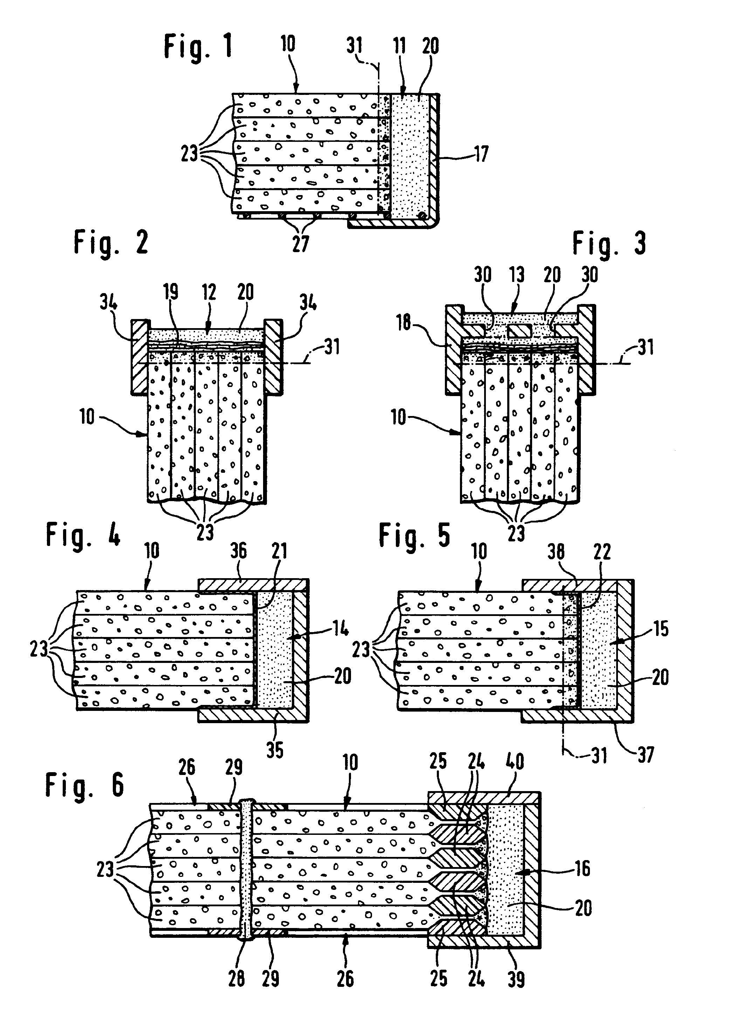

Bei der Ausführungsform nach Fig. 1 ist der Filterkörper (10) in einen im Querschnitt winkelförmiges Rahmenteil (17) eingelegt, auf dessen bei der Montage horizontalen Schenkel die Lagen (23) des Filterkörpers (10) aufliegen, während der vertikale Schenkel einen Abstand zu dem Rand des Filterkörpers (10) einhält. Der Bereich zwischen dem Rand des Filterkörpers (10) und dem vertikalen Schenkel des Rahmenteils (17) wird durch ein aushärtendes Material (20) ausgegossen, beispielsweise ein aus zwei Komponenten zusammengesetztes Polyurethan. Die Viskosität dieses Materials (20) ist auf die Größe der Poren des Filterkörpers (10) und auf die Aushärtezeit so abgestimmt, daß die Eindringtiefe beschränkt ist, mit welcher das aushärtende Material (20) in den Rand des Filterkörpers (10) eintritt. Die Eindringtiefe wird durch die Linie (31) begrenzt. Diese Eindring tiefe sollte das eins- bis fünffache der Durchmesser der Poren des Filterkörpers (10) betragen. Dadurch wird eine ausreichend sichere Verbindung gewährleistet, während gleichzeitig der verfügbare Filterquerschnitt nicht nennenswert reduziert wird. Praktische Versuche haben gezeigt, daß eine Beschränkung der Eindringtiefe bei drucklos eingegossenem, aushärtendem Material dann in befriedigender Weise erhalten wird, wenn die Viskosität eingestellt ist und die Aushärtezeit kleiner als 2 min bei einer Porengröße von 20 ppi beträgt. Hierfür ist ein thixotropes Material geeignet. Dabei kann bei kleineren Porengrößen das aushärtende Material dünnflüssiger sein und eine längere Aushärtezeit haben als bei größeren Poren.

Bei der Ausführungsform nach Fig. 1 ist ferner vorgesehen, daß eine Seite des Filterkörpers (10) mittels eines Stützgitters (27) abgedeckt ist, das vor den Lagen (23) des Filterkörpers (10) in das Rahmenteil (17) eingelegt wurde und das mit dem Rahmen (11) fest verbunden ist. Bei dem Ausführungsbeispiel der Fig. 1 besteht das Stützgitter (27) aus einem Metallgitter. Zusätzlich kann vorgesehen werden, daß auch auf die Oberseite des Filterkörpers (10) ein entsprechendes Stützgitter (27) aufgelegt wird, das dann ebenfalls mit dem aushärtenden Material (20) in seinem Randbereich umgossen wird, so daß es ebenfalls in dem Rahmen (11) gehalten ist.

In Abweichung von der Ausführungsform nach Fig. 1 wird bei einer anderen Ausführungsform vorgesehen, daß das Rahmenteil (17) nur eine Form darstellt, die sich nicht mit der den Rahmen (11) bildenden, aushärtenden Masse verbindet. Der Filterkörper (10) mit dem angegossenen Rahmen (11) wird dann von diesem Rahmenteil (17) getrennt, das beispielsweise aus Metall hergestellt sein kann. Der Rahmen (11) besteht dann ausschließlich aus dem aushärtenden Material. Diese Art Formrahmen kann bei allen übrigen Ausführungsformen (mit Ausnahme Fig. 3) vorgesehen werden.

Bei der Ausführungsform nach Fig. 2 ist vorgesehen, daß der aus mehreren Lagen (23) zusammengesetzte Filterkörper (10) an seinem Rand auf beiden Seiten mit einem Ring (34) eingefaßt ist, die in Umfangsrichtung, d.h. quer zur Filterfläche, über den Rand des Filterkörpers (10) übersteht. Die Ringe (34) können mit zahnartigen Ansätzen versehen sein, mit denen sie in die jeweils äußerste Lage. (23) des Filterkörpers (10) eindringen. Der Umfang des vorzugsweise rechteckigen Filterkörpers (10) ist in dem Bereich zwischen den beiden Ringen (31) mit einem Flies oder einem Gewebe o.dgl. versehen, das in bandförmigem Zustand aufgewickelt worden ist. Dieses als Zwischenlage (19) dienende Flies oder Gewebe ist vor dem Aufbringen mit dem aushärtenden Material (20) getränkt worden. Das aushärtende Material dringt auch bei dieser Ausführungsform nur bis zu der mit der Linie (31) gekennzeichneten Eintauchtiefe, die auch bei dieser Ausführungsform durch die in Abhängigkeit von der Porengröße eingestellte Viskosität und Aushärtezeit des aushärtenden Materiales (20) bestimmt wird. Die Bewicklung kann bei dieser Ausführungsform in der Weise erfolgen, daß der Filterkörper (10) so in einer Vorrichtung bewickelt wird, wie er in Fig. 2 dargestellt ist, d.h. mit in Vertikalebenen liegenden Lagen (23). Die Zwischenlage aus Flies o.dgl. verhindert, daß das aushärtende Material von dem Rand des Filterkörpers (10) abläuft, der sich in einer Vorrichtung um eine horizontale Achse während des Bewickelns dreht. Bei dem Bewickeln wird das aushärtende Material (20) zweckmäßigerweise mit einer Druckrolle in den Rand des Filterkörpers (10) eingewalzt.

Bei der Ausführungsform nach Fig. 3 ist der Rand des aus mehreren Lagen (23) gebildeten Filterkörpers (10) mit einem doppel-T-förmigen Rahmenteil (18) eingefaßt. Der Schenkel dieses Rahmenteils (18), der in Abstand zu dem Rand des Filterkörpers (10) liegt, ist mit Durchbrechungen (30) versehen. In diesen Rahmenteil (18) wird das aushärtende Material (20) eingegossen oder auch eingewalzt. Aufgrund der Einstellung der Viskosität und der Aushärtezeit in Abhängigkeit von der Porengröße des Filterkörpers (10) ergibt sich die durch die Linie (31) definierte Eindringtiefe. In Abweichung von der Darstellung nach Fig. 3 reicht es aus, wenn das aushärtende Material (20) nur in dem Bereich zwischen dem Steg des Rahmenteils (18) und dem Rand des Filterkörpers (10) vorhanden ist.

Der wiederum aus mehreren Lagen (23) zusammengesetzte Filterkörper (10) ist an seinem Rand zunächst mit einer Zwischenlage (21) eingefaßt, die den Rand vor dem Anbringen des aushärtenden Materials (20) versiegelt. Als Zwischenlage (21) kann eine sich über den Rand in den Bereich der jeweils oberen oder unteren Lage erstreckende Folie vorgesehen werden, insbesondere eine Folie aus Polyurethan, wenn die Lagen (23) aus Polyurethanschaum bestehen. Das aushärtende Material (20) wird dann erst auf die Zwischenlage (21) aufgebracht. Dabei erfolgt das Aufbringen in einer zweiteiligen Form (35, 36) mit leichtem Druck, so daß die Zwischenlage (21) sich zumindest teilweise in die im Randbereich befindlichen Poren des Filterkörpers (10) hineindrückt, so daß ein gewisser Formschluß erhalten wird. Hierbei ist es sinnvoll, wenn eine sehr dünne, filmartige Folie Verwendung findet.

In Abweichung von der Ausführungsform nach Fig. 4 wird anstelle einer Folie eine Versiegelung mittels einer dünnen, filmartig aufgetragenen Beschichtung vorgenommen. Hierzu kann ein Lack Verwendung finden, sofern dieser Lack ohne die Entwicklung von Gasen oder Dämpfen aushärtet, durch die das Adsorptionsmittel des Filterkörpers (10) vergiftet werden könnte. Bei der Ausführungsform nach Fig. 4 bedarf es keiner Anpassung der Viskosität und/oder der Aushärtezeit und des aushärtenden Materials (20) in bezug auf die Porengröße des Filterkörpers (10), da dieses Material nicht in den versiegelten Rand des Filterkörpers (10) eindringen kann.

Bei der Ausführungsform nach Fig. 5 ist der Rand des aus mehreren Lagen (23) gebildeten Filterkörpers (10) mit einer Zwi schenlage (22) eingefaßt, bevor der Rand (15) aus aushärtendem Material (20) angebracht wird. Die Zwischenlage (22) besteht bei dieser Ausführungsform aus einem in definierter Weise porösen Material, beispielsweise einer perforierten Folie oder einem Flies o.dgl. aus Fasermaterial. Das aushärtende Material (20) durchdringt die Zwischenlage (22) und dringt in den Rand des Filterkörpers (10) bis zu den Linien (31) mit einer definierten Tiefe ein. Bei dieser Ausführungsform wird mithin die Eindringtiefe nicht nur von der Viskosität und der Aushärtezeit des aushärtenden Materials (20), sondern auch von der Durchlässigkeit der Zwischenlage (22) bestimmt. Je durchlässiger die Zwischenlage (22) ist, um so größer muß die Zähigkeit und kürzer die Aushärtezeit des Materials (20) sein. Auch bei dieser Ausführungsform wird vorgesehen, daß das aushärtende Material (20) in eine Form (37, 38) eingefüllt wird. Abhängig von der Wahl der Durchlässigkeit der Zwischenlage (22) und/oder der Einstellung des aushärtenden Materials (20) bezüglich Zähigkeit und Aushärtezeit kann auch bei dieser Ausführungsform das Füllen der Form (37, 38) mit zumindest leichtem Überdruck erfolgen.

Bei der Ausführungsform nach Fig. 6 wird das Eindringen des Materials (20) des an den Filterkörper (10) angeformten Rahmens (16) dadurch verhindert, daß durch Zusammenpressen die Poren der Lagen (23) des Filterkörpers (10) in dem Randbereich geschlossen werden. Hierzu sind in dem Randbereich zwischen die einzelnen aus Polyurethanschaum hergestellten Lagen (23) des Filterkörpers (10) Ringe (24) eingelegt. Die Ringe (24) haben jeweils eine Dicke, die etwa der Dicke der Lagen (23) entspricht. Die inneren Ränder der Ringe (24, 25) sind so geformt, daß kein abrupter Übergang zwischen den gepreßten und nicht zusammengepreßten Bereichen der Lagen (23) vorhanden ist, so daß die Gefahr einer mechanischen Beschädigung gering ist. Die Lagen (23) und die Ringe (24, 25) werden in eine zweiteilige Form (39, 40) eingelegt, wonach der Rahmen (16) aus dem aushärtenden Material (20) angeformt wird. Da bei dieser Ausführungsform durch das Zusammenpressen der Ränder der Lagen (23) eine völlige Dichtheit erhalten wird, kann das Einführen des Materials (20) mit hohem Druck erfolgen. Es ist deshalb möglich, die Ränder des Filterkörpers (10) mit einem thermoplastischen Kunststoff zu umspritzen, der im Sinne der vorliegenden Anmeldung ebenfalls als aushärtbares Material bezeichnet wird. Selbstverständlich ist es auch möglich, einen dem Werkstoff der Lagen (23), insbesondere dem Polyurethanschaum, angepaßten Werkstoff aus zwei Komponenten einzuspritzen, insbesondere ein entsprechendes Polyurethan.

Die Ringe (24, 25) können sich an ihren äußeren Enden verjüngen, so daß in diesem Bereich die äußersten Ränder der Lagen (23) nicht mehr oder zumindest nicht so stark zusammengepreßt sind, so daß in diesem Bereich das aushärtende Material (20) eindringen kann.

Bei der Ausführungsform nach Fig. 6 sind der obere und der untere Ring (25) mit einem sich quer über die Filterfläche erstreckenden Stützgitter (26) einteilig hergestellt. Dieses Stützgitter (26) bildet an einer oder mehreren Stellen Knoten (29). Im Bereich dieser Knoten (29) sind Aussparungen vorgesehen, durch die eine Kanüle hindurch stechbar ist. Beim Zurückziehen der Kanüle wird eine aushärtende Kunststoffmasse ausgespritzt, die einen die beiden Stützgitter (26) und auch die einzelnen Lagen (23) miteinander bildenden Kunststoffstift (28) zurückläßt, der in dieser Form aushärtet. Da auch bei diesem Anbringen des Kunststoffstiftes (28) dessen Material in einem bestimmten Maß in die Poren der Lagen (23) eindringt, wird auf diese Weise ebenfalls eine Verbindung zwischen deagen (23) erhalten. Das Anbringen derartiger Kunststoffstifte kann zur Verfestigung des Filterkörpers (10) auch dann vorteilhaft sein, wenn keine Stützgitter (26) vorhanden sind.

Bei den Ausführungsformen nach Fig. 1, 2 und 4 bis 6 können anstelle von an dem Filter verbleibenden Rahmenteilen (17; 34; 35 ,36; 37,38; 39,40) auch entsprechend geformte Formelemente vorgesehen werden, die nach dem Einbringen des aushärtenden Materials (20) abgenommen werden. Die Rahmen (11,12,13,14,15, 16) bestehen dann nur aus dem aushärtenden Material (20). An den Rahmenteilen (17; 34; 35,36; 37,38; 39,40) oder an den um aus dem aushärtenden Material bestehenden Rahmen (11,12,13,14, 15,16) können in weiterer Ausgestaltung Dichtungselemente, wie umlaufende Dichtungsleisten o.dgl., angebracht sein. Diese Dichtungselemente können angeformt sein oder eingegossen sein. Es ist auch möglich, nur Aussparungen für Dichtungselemente vorzusehen, in denen diese eingesetzt werden, vorzugsweise formschlüssig eingerastet.

## Patentansprüche

1. Filter für eine Klimaanlage eines Kraftfahrzeuges mit einem Filterkörper aus einem in mehreren Lagen angeordneten Material mit offenen Poren, die mit Adsorptionsmittel, insbesondere Aktivkohle-Körnern, beschichtet sind, und mit einem den Filterkörper umgebenden Rahmen aus Kunststoff, dadurch gekennzeichnet, daß der Rahmen (11, 12, 13, 14, 15, 16) an den Filterkörper angeformt ist, und daß zwischen dem Filterkörper (10) und dem Rahmen (11, 16) eine den Rand des Filterkörpers (10) über seine gesamte Stärke einfassende Verbindung aufgrund eines bis zu einer vorgegebenen Tiefe in den Rand des Filterkörpers (10) eingedrungenen, ausgehärteten Materials besteht.

2. Filter nach Anspruch 1, dadurch gekennzeichnet, daß der Rand des Filterkörpers (10) mit einem vorgefertigten Rahmenteil (17, 18) umgeben ist, und daß der Zwischenraum zwischen diesem Rahmenteil (17, 18) und den Rand des Filterkörpers (10) mit dem aushärtenden Material (20) ausgegossen ist.

3. Filter nach Anspruch 1, dadurch gekennzeichnet, daß das aushärtende Material (20) mit einer Wandstärke von wenigstens 1,0 mm den Rand des Filterkörpers (10) überragt und den Rahmen (14, 15, 16) bildet.

4. Filter nach einem der Ansprüche 1 bis 3, dadurch gekennzeichnet, daß zwischen dem Rand des Filterkörpers (10) und dem aushärtenden Material (20) eine Zwischenlage (21, 22) angeordnet ist.

5. Filter nach Anspruch 4, dadurch gekennzeichnet, daß die Zwischenlage (21) aus einem deformierbaren, in die im Randbereich des Filterkörpers (10) befindlichen Poren hineingedrückten Material besteht.

6. Filter nach Anspruch 4 oder 5, dadurch gekennzeichnet, daß die Zwischenlage (22) porös ist.

7. Filter nach Anspruch 5 oder 6, dadurch gekennzeichnet, daß die Zwischenlage (21, 22) eine Folie ist.

8. Filter nach einem der Ansprüche 4 bis 6, dadurch gekennzeichnet, daß die Zwischenlage (22) eine Matte oder ein Flies o.dgl. aus Fasermaterial ist.

9. Filter nach Anspruch 4 oder 5, dadurch gekennzeichnet, daß die Zwischenlage (21, 22) eine Lackschicht ist.

10. Filter nach einem der Ansprüche 4 bis 9, dadurch gekennzeichnet, daß der Rahmen (14, 15) an den mittels der Zwischenlage (21, 22) teilweise versiegelten Rand des Filterkörpers (10) angespritzt ist.

11. Filter nach Anspruch 1, dadurch gekennzeichnet, daß der Filterkörper (10) mit einem gewickelten oder geschichteten, mit dem aushärtenden Material (20) getränkten, bandförmigen Flies (19) o.dgl. umgeben ist.

12. Filter nach Anspruch 1, dadurch gekennzeichnet, daß der Rahmen (16) an den zum wenigstens teilweisen Schließen der Poren zusammengepreßten Rand des Filterkörpers (10) angeformt ist.

13. Filter nach Anspruch 12, dadurch gekennzeichnet, daß der Filterkörper (10) aus mehreren Lagen von plattenförmigen Filterelementen (23) zusammengefügt ist, und daß die Ränder der einzelnen Lagen jeweils zwischen Ringen (24,25) zusammengepreßt sind.

14. Filter nach einem der Ansprüche 1 bis 13, dadurch gekennzeichnet, daß der Filterkörper (10) mit wenigstens einem Stützgitter (26, 27) versehen ist, das in dem Rahmen (11, 16) verankert ist.

15. Filter nach Anspruch 13 oder 14, dadurch gekennzeichnet, daß wenigstens einer der Ringe (25) einteilig mit einem Stützgitter (26) ist.

16. Filter nach einem der Ansprüche 1 bis 15, dadurch gekennzeichnet, daß in dem aus mehreren Lagen (23) gebildeten Filterkörper (10) mehrere die Lagen miteinander verbindende durch Einspritzen von aushärtendem Material eingebrachte Stifte (28) vorgesehen sind.

17. Filter nach Anspruch 16, dadurch gekennzeichnet, daß die Stifte (28) mit wenigstens einem Stützgitter (26) fest verbunden sind.

18. Filter nach einem der Ansprüche 1 bis 17, dadurch gekennzeichnet, daß der Rahmen (11,12,13,14,15,16) mit einem oder mehreren vorzugsweise umlaufenden Dichtungselementen versehen ist.

19. Filter nach Anspruch 18, dadurch gekennzeichnet, daß das oder die Dichtungselemente an die Rahmen (11,12,13,14,15, 16) angeformt sind.

20. Filter nach Anspruch 18, dadurch gekennzeichnet, daß das oder die Dichtungselemente in die Rahmen (11,12,13,14,15, 16) eingegossene Dichtungsprofile sind.

21. Filter nach Anspruch 18, dadurch gekennzeichnet, daß die Rahmen (11,12,13,14,15,16) mit eingeformten Aufnahmen für Dichtungselemente versehen sind.


## Claims

1. Filter for a motor vehicle air conditioning system comprising a filter body consisting of a plurality of layers of a material with open pores which are coated with an adsorbent, in particular with activated charcoal grains, and a frame made from a plastic material and enclosing the filter body, characterized in that the frame (11, 12, 13, 14, 15, 16) is formed as part of the filter body and that there is provided between the filter body (10) and the frame (11, 16) a connection enclosing the edge of the filter body (11) over its full thickness and consisting of material which has penetrated a predetermined depth into the marginal area of the filter body (10) and has then cured.

2. Filter according to claim 1, characterized in that the edge of the filter body (10) is enclosed by a pre-fabricated frame part (17, 18) and that the space between the frame part (17, 18) and the edge of the filter body (10) is filled with the curing material (20).

3. Filter according to claim 1, characterized in that the curing material (20), having a wall thickness of at least 1.0 mm, projects beyond the edge of the filter body (10) thus forming the frame (14, 15, 16).

4. Filter according to any of claims 1 to 3, characterized in that an intermediate layer (21, 22) is arranged between the edge of the filter body (10) and the curing material (20).

5. Filter according to claim 4, characterized in that the intermediate layer (21) consists of a deformable material which can be pressed into the pores in the marginal area of the filter body (10).

6. Filter according to claim 4 or 5, characterized in that the intermediate layer (22) is porous.

7. Filter according to claim 5 or 6, characterized in that the intermediate layer (21, 22) is a film.

8. Filter according to any of claims 4 to 6, characterized in that the intermediate layer (22) is a mat or a non-woven fabric, or the like, consisting of a fibrous material.

9. Filter according to claim 4 or 5, characterized in that the intermediate layer (21, 22) is a varnish coat.

10. Filter according to any of claims 4 to 9, characterized in that the frame (14, 15) is molded as an integral part of the edge of the filter body (10) which is sealed in part by the intermediate layer (21, 22).

11. Filter according to claim 1, characterized in that the filter body (10) is enclosed by a strip-like non-woven wound or layered fabric (19), or the like, which is impregnated with the curing material (20).

12. Filter according to claim 1, characterized in that the frame (16) is formed integrally with the edge of the filter body (10), which latter is compressed in order to close at least part of the pores.

13. Filter according to claim 12, characterized in that the filter body (10) is assembled from a plurality of layers of sheet-like filter elements (23) and that the edges of each layer are compressed between rings (24, 25).

14. Filter according to any of claims 1 to 13, characterized in that the filter body (10) is provided with at least one supporting grid (26, 27) secured in position in the frame (11, 16).

15. Filter according to claim 13 or 14, characterized in that at least one of the rings (25) is formed integrally with a supporting grid (26).

16. Filter according to any of claims 1 to 15, characterized in that the filter body (10), which is composed of a plurality of layers (23), contains a plurality of pins (28) serving to interconnect the individual layers and formed by the injection of curing material.

17. Filter according to claim 16, characterized in that the pins (28) are firmly connected with at least one supporting grid (26).

18. Filter according to any of claims 1 to 17, characterized in that the frame (11, 12, 13, 14, 15, 16) is provided with one or more sealing elements extending preferably all around its circumference.

19. Filter according to claim 18, characterized in that the sealing element or elements are formed integrally with the frames (11, 12, 13, 14, 15, 16).

20. Filter according to claim 18, characterized in that the sealing element or elements take the form of sealing profiles molded integrally with the frames (11, 12, 13, 14, 15, 16).

21. Filter according to claim 18, characterized in that the frames (11, 12, 13, 14, 15, 16) are provided with integrally formed seats for sealing elements.


**Revendications**

1. Filtre pour une installation de climatisation d'un véhicule automobile, comportant un corps de filtre formé d'un matériau, disposé en plusieurs couches et comportant des pores ouverts gui sont recouverts avec un agent d'adsorption, notamment des grains de charbon actif, ainsi qu'un châssis en matière plastique entourant le corps de filtre, caractérisé en ce que le châssis (11, 12, 13, 14, 15, 16) a une forme adaptée au corps de filtre (10) et il est prévu entre le corps de filtre (10) et le châssis (11, 16) une liaison maintenant le bord du corps de filtre (10) sur toute son épaisseur grâce à un matériau durci et pénétrant jusqu'à une profondeur prédéterminée dans le bord du corps de filtre (10).

2. Filtre selon la revendication 1, caractérisé en ce que le bord du corps de filtre (10) est entouré par une partie de châssis préfabriquée (17, 18) et en ce que le volume intermédiaire situé entre cette partie de châssis (17, 18) et,le bord du corps de filtre (10) est rempli par coulée du matériau durcissable (20).

3. Filtre selon la revendication 1, caractérisé en ce que le matériau durcissable (20), d'une épaisseur de paroi d'au moins 1,0 mm, dépasse du corps de filtre (10) gui constitue le châssis (14, 15, 16).

4. Filtre selon une des revendications 1 à 3, caractérisé en ce qu'il est prévu une couche intermédiaire (21, 22) entre le bord du corps de filtre (10) et le matériau durcissable (20).

5. Filtre selon la revendication 4, caractérisé en ce que la couche intermédiaire (21) se compose d'une matière déformable et ayant pénétré par pression dans les pores situés dans une zone de bord du corps de filtre (10).

6. Filtre selon la revendication 4 ou 5, caractérisé en ce que la couche intermédiaire (22) est poreuse.

7. Filtre selon la revendication 5 ou 6, caractérisé en ce que la couche intermédiaire (21, 22) est une feuille.

8. Filtre selon une des revendications 4 à 6, caractérisé en ce que la couche intermédiaire (22) est une natte ou une nappe, ou analogue, en matière fibreuse.

9. Filtre selon la revendication 4 ou 5, caractérisé en ce que la couche intermédiaire (21, 22) est une couche de laque.

10. Filtre selon une des revendications 4 à 9, caractérisé en ce que le châssis (14, 15) est formé par injection sur le bord, partiellement colmaté au moyen du corps de filtre (10).

11. Filtre selon la revendication 1, caractérisé en ce que le corps de filtre (10) est entouré par une nappe (19) ou analogue, en forme de bande, enroulée ou stratifiée et imprégnée du matériau durcissable (20).

12. Filtre selon la revendication 1, caractérisé en ce que le châssis (16) est formé sur le bord du corps de filtre (10) gui a été comprimé pour fermer, au moins partiellement, les pores.

13. Filtre selon la revendication 12, caractérisé en ce que le corps de filtre (10) est constitué de plusieurs couches d'éléments de filtre (23) en forme de plaques et en ce que les bords des différentes couches sont respectivement comprimés entre des anneaux (24, 25).

14. Filtre selon une des revendications 1 à 13, caractérisé en ce que le corps de filtre (10) est pourvu d'au moins une grille de soutien (26, 27) gui est ancrée dans le châssis (11, 16).

15. Filtre selon la revendication 13 ou 14, caractérisé en ce qu'au moins un des anneaux (25) forme une seule pièce avec une grille de soutien (26).

16. Filtre selon une des revendications 1 à 15, caractérisé en ce qu'il est prévu, dans le corps de filtre (10) constitué de plusieurs couches (23), plusieurs filets (28) formés par injection du matériau durcissable et liant les couches entre elles.

17. Filtre selon la revendication 16, caractérisé en ce que les filets (28) sont reliés solidement à l'aide d'au moins une grille de soutien (26).

18. Filtre selon une des revendications 1 à 17, caractérisé en ce que le châssis (11, 12, 13, 14, 15, 16) est pourvu d'un ou plusieurs éléments d'étanchéité, de préférence périphériques.

19. Filtre selon la revendication 18, caractérisé en ce que le ou les éléments d'étanchéité sont formés sur le châssis (11, 12, 13, 14, 15, 16).

20. Filtre selon la revendication 18, caractérisé en ce que le ou les éléments d'étanchéité sont des profilés d'étanchéité incorporés au moulage dans le châssis (11, 12, 13, 14, 15, 16).

21. Filtre selon la revendication 18, caractérisé en ce que les châssis (11, 12, 13, 14, 15, 16) sont pourvus d'évidements formés,au moulage,pour des éléments d'étanchéité.

Fig. 1

Fig. 2

Fig. 3

Fig. 4

Fig. 5

Fig. 6